# EUROPÄISCHE PATENTANMELDUNG

(11) **EP 0 819 662 A1**
(43) Veröffentlichungstag der Anmeldung: **21.01.1998**
(21) Anmeldenummer: 97890140.3
(22) Anmeldetag: 18.07.1997
(51) Int. Cl.: C04B 28/02, C04B 16/08

(54) **Dämmstoff zur Wärme- und Trittschalldämmung eines Bodens**

(30) Priorität: 19.07.1996 AT 1299/96
(71) Anmelder: Wimberger, Franz, A-4291 Lasberg (AT)
(72) Erfinder: Wimberger, Franz, A-4291 Lasberg (AT)
(74) Vertreter: Hübscher, Helmut, Dipl.-Ing.

(57) **Zusammenfassung**

Es wird ein Dämmstoff zur Wärme- und Trittschalldämmung eines Bodens bewschrieben, welcher Dämmstoff aus einer aushärtbaren, mit Wasser angemachten Mischung aus einem geschlossenzelligen Schaumstoffgranulat abgestufter Körnung, insbesondere Polystyrolgranulat, und einem zementhaltigen Bindemittel besteht. Um eine vorteilhafte Wärme- und Trittschalldämmung zu erhalten, wird vorgeschlagen, daß das Bindemittel neben dem Zementanteil, der auf 100 kg je m³ der angemachten Mischung nach oben begrenzt ist, einen wenigstens 10 Gew.% des Zementanteiles ausmachenden Anteil an amorpher Kieselsäure enthält und daß der Anteil der Granulatkörner mit einem mittleren Korndurchmesser zwischen 2,0 und 6,0 mm am Schaumstoffgranulat zwischen 60 und 85 % liegt.

## Beschreibung

Die Erfindung bezieht sich auf einen Dämmstoff zur Wärme- und Trittschalldämmung eines Bodens, bestehend aus einer aushärtbaren, mit Wasser angemachten Mischung aus einem geschlossenzelligen Schaumstoffgranulat abgestufter Körnung, insbesondere Polystyrolgranulat, und einem zementhaltigen Bindemittel, sowie auf ein Verfahren zu seiner Herstellung.

Zur Wärme- und Trittschalldämmung eines Bodens werden üblicherweise auf einer Beschüttung Schaumstoffplatten zur Wärmedämmung und auf diesen Mineralfasermatten zur Trittschalldämmung verlegt, bevor ein Estrich aufgebracht wird. Um die durch die unvermeidlichen Stoßfugen bedingte Gefahr von Schall- und Kältebrücken zu vermeiden und den erheblichen Verlegeaufwand zu verringern, wurde bereits eine Dämmung aus einem zementgebundenen Schaumstoffgranulat vorgeschlagen. Da zur Bindung des Schaumstoffgranulates ca. 20 Vol.% Zement eingesetzt werden, ergibt sich eine für die Trittschalldämmung zu hohe dynamische Steifigkeit, so daß zur Erfüllung höherer Ansprüche wieder zusätzliche Mineralfasermatten verlegt werden müssen. Versuche, zumindest einen Teil des Zementes durch hydraulischen Kalk zu ersetzen, blieben unbefriedigend, weil je nach den gewählten Anteilen entweder das Abbindeverhalten, die Belastbarkeit oder die Dämmeigenschaften nicht den Erwartungen gerecht werden konnten.

Der Erfindung liegt somit die Aufgabe zugrunde, einen einfach aufbringbaren Dämmstoff zu schaffen, der neben einer guten Wärme- und Trittschalldämmung ein vorteilhaftes Abbindeverhalten und eine ausreichende Belastbarkeit mit sich bringt.

Ausgehend von einem Dämmstoff zur Wärme- und Trittschalldämmung eir Bodens der eingangs geschilderten Art löst die Erfindung die gestellte Aufgabe dadurch, daß das Bindemittel neben dem Zementanteil, der auf 100 kg je m³ der angemachten Mischung nach oben begrenzt ist, einen wenigstens 10 Gew.% des Zementanteiles ausmachenden Anteil an amorpher Kieselsäure enthält und daß der Anteil der Granulatkörner mit einem mittleren Korndurchmesser zwischen 2,0 und 6,0 mm am Schaumstoffgranulat zwischen 60 und 85 % liegt.

Das bei der Hydratation des Zementes neben dem die Festigkeit des Betons bestimmenden Calciumsilicathydrat entstehende weichere Calciumhydrat reagiert mit der zugesetzten, amorphen Kieselsäure ebenfalls zu Calciumsilicathydrat, so daß im Vergleich zu herkömmlichen Bindemitteln auf Zementbasis der Zementanteil eines gattungsgemäßen Dämmstoffes deutlich herabgesetzt werden kann, ohne die Belastbarkeit des Dämmstoffes zu gefährden. In diesem Zusammenhang ist außerdem zu bedenken, daß die Kieselsäure als besonders feines Pulver sich in die zwischen den Zementkörnern und den Schaumstoffgranulatteilchen ergebenden Poren einlagert und daher zusätzliche Haftbrücken sicherstellt. Die Schaumstoffgranulatteilchen, die aufgrund ihrer abgestuften Körnung bereits eine vergleichsweise dichte Packung erlauben, werden daher in vorteilhafter Weise in eine netzartige Binderphase eingebettet, und zwar mit der Wirkung, daß sich unterstützt durch den vergleichsweise großen grobkörnigen Schaumstoffanteils die dynamische Steifigkeit von ca. 50 MN/m³ bei ausschließlich zementgebundenem Schaumstoffgranulat auf ca. 7 bis 11MN/m³ verringert. Wegen der durch die Zugabe von amorpher Kieselsäure ermöglichten Herabsetzung des Zementanteiles und des damit verbundenen veringerten Gewichtes des Dämmstoffes werden außerdem hervorragende Werte bezüglich der Wärmedämmung erreicht (λ = 0,45 bis 0,50 W/mK). Das Abbindeverhalten selbst wird durch den Zement vorteilhaft bestimmt. Um eine merkliche Verringerung des Zementanteiles zu ermöglichen, ist ein Mindestanteil an Kieselsäure von 10 Gew.% des Zementanteiles erforderlich. Besonders günstige Verhältnisse ergeben sich jedoch, wenn der Anteil der amorphen Kieselsäure 15 bis 30 Gew.% des Zementanteiles ausmacht. Ein höherer Kieselsäureanteil ist in den meisten Anwendungsfällen nicht notwendig, weil mit einem höheren Kieselsäureanteil vor allem das Gewicht des Dämmstoffes vergrößert wird, ohne den Zementanteil senken zu können. Der Zementanteil liegt vorzugsweise zwischen 25 und 40 kg, vorzugsweise zwischen 30 und 35 kg, je m³ der angemachten Mischung. Nur in Ausnahmefällen, in denen eine besonders hohe Belastungsfähigkeit des Dämmstoffes gefordert wird, sollte der Zementanteil über diese Werte angehoben werden, weil dann insbesondere die Trittschalldämmung leidet. Bis zu einem Zementanteil von 100 kg je m³ der angemachten Mischung ist allerdings noch eine den bekannten Dämmstoffen aus rein zementgebundenen Schaumstoffgranulaten überlegene Trittschalldämmung festzustellen.

Damit der Einfluß der amorphen Kieselsäure auf den für eine bestimmte Belastbarkeit des Dämmstoffes benötigten Zementanteil vorteilhaft ausgenützt werden kann, ist für eine möglichst gleichmäßige Verteilung des Zementes und der pulverförmigen Kieselsäure in der angemachten Mischung zu sorgen. Zu diesem Zweck kann zunächst der Zement mit dem pulverförmigen Kieselsäureanteil und den gegebenenfalls vorgesehenen Hilfsmitteln innig vermischt werden, bevor diese Vormischung mit dem Schaumstoffgranulat in zumindest zwei Stufen unter dosierter Zugabe des Anmachwassers gemischt wird. Der Mischvorgang kann dabei vorteilhaft in einem für eine Druckluftförderung des Mischgutes ausgelegten Mischkessel durchgeführt werden. Dieser Mischkessel wird zunächst mit etwa drei Viertel der Gesamtmenge des Schaumstoffgranulates beschickt, bevor der vorgemischte Bindemittelanteil mit dem dosierten Anmachwasser zugegeben wird. Das restliche Schaumstoffgranulat wird dann während des Mischvorganges eingefüllt. Nach dem Mischvorgang kann die angemachte Mischung mit Hilfe von Druckluft ausgefördert und über eine Schlauchleitung zum Einbringungsort transportiert werden.

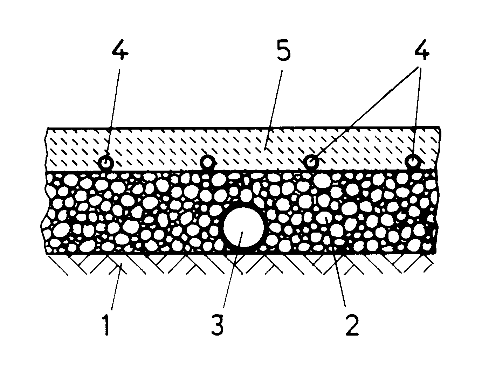

In der Zeichnung ist der Erfindungsgegenstand beispielsweise dargestellt, und zwar wird eine Wärme- und Trittschalldämmung eines Bodens mit Hilfe eines erfindungsgemäßen Dämmstoffes in einem schematischen Vertikalschnitt gezeigt.

Auf dem Boden 1 eines Bauwerkes wird eine mit Wasser angemachte Mischung aus Polystyrolgranulat und einem Bindemittel aufgebracht, das neben Zement auch einen auf die Zementmenge abgestimmten Anteil an amorpher Kieselsäure enthält. Diese Mischung wird in der jeweils erforderlichen Dicke von beispielsweise 8 bis 10 cm aufgetragen und bildet nach dem Abbinden einen Dämmstoff 2, der allenfalls auf dem Boden 1 verlegte Kanalisationsrohre 3 umschließt, so daß im Bereich dieser Kanalisationsrohre 3 keine Kälte- oder Schallbrücken entstehen können. Auf den Dämmstoff 2, der aufgrund des zementhaltigen Bindemittels bald eine ausreichende Begehfestigkeit aubildet, können dann in üblicher Weise z. B. Heizungsrohre 4 verlegt werden, bevor ein Betonestrich 5 aufgebracht wird.

Zur Herstellung von 1 m³ eines erfindungsgemäßen Dämmstoffes wurden beispielsweise 1150 l Polystyrolgranulat eingesetzt, und zwar mit einer Sieblinie, bei der die Anteile der Körner mit einem mittleren Korndurchmesser kleiner 0, 3 mm kleiner als 3 %, der Körner mit einem mittleren Korndurchmesser zwischen 0,3 und 1,0 mm kleiner als 10 %, der Körner mit einem mittleren Korndurchmesser zwischen 1,0 und 2,0 mm kleiner als 15 %, der Körner mit einem mittleren Korndurchmesser zwischen 2,0 und 4,5 mm zwischen 45 und 60 %, der Körner mit einem mittleren Korndurchmesser zwischen 4,5 und 6,0 mm zwischen 15 und 25 % und der Körner mit einem mittleren Korndurchmesser größer als 6, 0 mm kleiner als 12 % betrugen. Die Korngröße war mit 8 mm nach oben begrenzt. Das Bindemittel enthielt 32 kg Portlandzement 375, der mit 10 kg amorpher Kieselsäure in Pulverform (mit einer um das ca. 35fache größeren spezifischen Oberfläche als das Zementpulver) unter Beigabge von 1kg Betonverflüssiger und 2kg eines Haftvermittlers auf Basis eines Vinylacetat-Copolymers als Hilfsmittel vermischt wurde. Das Polystyrolgranulat, das vorzugsweise aus einem entsprechend vermahlenen Polystyrolabfall gewonnen wurde, wurde unter Beimengung von 55 l Anmachwasser innig vermischt. Nach dem Abbinden betrugen das Raumgewicht des Dämmstoffes ca. 78 kg/m³, die dynamische Steifigkeit unter 10 MN/m³, die Wärmeleitfähigkeit unter 0,050 W/mK, die Trittschallverbesserung gegenüber herkömmlichen zementgebundenen Schaumstoffgranulaten über 30 dB und die Belastungsfähigkeit (bei aufgebrachtem Estrich) über 0,02 N/mm².

## Patentansprüche

1. Dämmstoff zur Wärme- und Trittschalldämmung eines Bodens, bestehend aus einer aushärtbaren, mit Wasser angemachten Mischung aus einem geschlossenzelligen Schaumstoffgranulat abgestufter Körnung, insbesondere Polystyrolgranulat, und einem zementhaltigen Bindemittel, dadurch gekennzeichnet, daß das Bindemittel neben dem Zementanteil, der auf 100 kg je m³ der angemachten Mischung nach oben begrenzt ist, einen wenigstens 10 Gew.% des Zementanteiles ausmachenden Anteil an amorpher Kieselsäure enthält und daß der Anteil der Granulatkörner mit einem mittleren Korndurchmesser zwischen 2,0 und 6,0 mm am Schaumstoffgranulat zwischen 60 und 85 % liegt.

2. Dämmstoff nach Anspruch 1, dadurch gekennzeichnet, daß der Anteil der amorphen Kieselsäure 15 bis 30 Gew.% des Zementanteiles ausmacht.

3. Dämmstoff nach Anspruch 1 oder 2, dadurch gekennzeichnet, daß der Zementanteil zwischen 25 una 40 kg, vorzugsweise zwischen 30 und 35 kg, je m³ der angemachten Mischung betrrägt.

4. Verfahren zum Herstellen eines Dämmstoffes nach den Ansprüchen 1 bis 3, wobei das Bindemittel mit dem Schaumstoffgranulat und gegebenenfalls mit Hilfsmitteln, beispielsweise Betonzusätzen, unter Zugabe von Anmachwasser innig vermischt wird, bevor diese Mischung aufgebracht und ausgehärtet wird, dadurch gekennzeichnet, daß zunächst der Zement mit der pulverförmigen Kieselsäure und den gegebenenfalls vorgesehenen Hilfsmitteln innig vermischt werden, bevor das Bindemittel unter Beigabe von Anmachwasser zunächst nur mit einem Teil des Schaumstoffgranulates gemischt und dann erst der restliche Teil des Schaumstoffgranulates in wenigstens einer Stufe zugesetzt wird.
